# EUROPEAN PATENT SPECIFICATION

(11) **EP 4 546 190 B1**
(45) Date of publication and mention of the grant of the patent: **02.12.2026**
(21) Application number: 23205377.7
(22) Date of filing: 24.10.2023
(51) Int. Cl.: G06F 21/62, H04W 12/02, G06N 3/008

(54) **PRIVACY PRESERVING COMMUNICATION BY ENVIRONMENTAL MODIFICATION**
KOMMUNIKATION MIT SCHUTZ DER PRIVATSPHÄRE DURCH UMGEBUNGSMODIFIKATION
COMMUNICATION PRÉSERVANT LA CONFIDENTIALITÉ PAR MODIFICATION ENVIRONNEMENTALE

(43) Date of publication of application: 30.04.2025
(73) Proprietor: HONDA MOTOR CO., LTD., Tokyo 105-8404 (JP)
(72) Inventor: Weißwange, Thomas, 63073 Offenbach/Main (DE); Dietrich, Manuel, 63073 Offenbach/Main (DE); Sarkisian, Alan, Saitoma 351-0188 (JP)
(74) Representative: Beder, Jens

(56) References cited:
- US-B1- 9 854 206
- US-B2- 11 494 502
- SUBASH NEUPANE ET AL: "Security Considerations in AI-Robotics: A Survey of Current Methods, Challenges, and Opportunities", ARXIV.ORG, CORNELL UNIVERSITY LIBRARY, 201 OLIN LIBRARY CORNELL UNIVERSITY ITHACA, NY 14853, 12 October 2023 (2023-10-12), XP091634482

## Description

Personal assistant systems including mobile autonomous devices provide a variety of services to humans. The provided services and assistance comprise but are not limited to communicating information or handing objects to an assisted person in a public environment.

In a public environment, other persons may be present and inadvertently become party to the information communicated via open communication channels by the autonomous device to the assisted person. Such open communication channels include in particular speech output as an increasingly used way of communication between the assisted person and the autonomous device.

Communicating information may be on request by the assisted person or initiated by the autonomous device due to recognizing a communication gap existing for the assisted person or user of the autonomous device.

Nevertheless, some information may at least in part include personal or sensitive information, which the autonomous device should not disclose to certain or all members of the public in order to avoid embarrassing the assisted person, or even compromise confidentiality. In a public environment, other persons present in the environment may visually take notice of physical objects the autonomous device hands to another person, e.g. a confidential document.

US 9,854,206 B1 discloses a method for a privacy-aware indoor drone exploration and communication framework. The method includes receiving a communication request for a target person from an outside caller and locating the target person in response to the communication request. The method establishes a video call between the target person and the outside caller to transmit images of the target person to the outside caller, and avoids showing privacy areas and privacy objects in the indoor environment in the images of the target person to the outside caller during the video call.

Publication "Security considerations in AI-Robotics: a survey of current methods, challenges, and opportunities" ,by Subash Neupane et al., ArXiv.org, Cornell University Library, 201 Olin Library Cornell University Ithaca, NY 14853, 12 October 2023, XP091634482, presents a comprehensive survey and taxonomy across three dimensions: attack surfaces, ethical and legal concerns, and Human-Robot Interaction (HRI) security, motivated by the need to address the security concerns in AI-Robotics systems. The publication provides a holistic understanding of these areas to enhance the overall AI-Robotics system security, beginning by surveying potential attack surfaces and provide mitigating defensive strategies. The publication further delves into ethical issues, such as dependency and psychological impact, as well as the legal concerns regarding accountability for these systems. Furthermore, emerging trends such as HRI are discussed, considering privacy, integrity, safety, trustworthiness, and explainability concerns. "

In the context of digital personal assistants, US 11,494,502 B2 discloses a personal assistance application, e.g. a smart speaker device, which adapts its responses to queries from a user based on environmental and content privacy estimations. The personal assistance application determines a privacy level of the information intended for communication and a privacy level of the environment into which the information is to be communicated for estimating the privacy context. The personal assistance application uses the estimated privacy context to select an appropriate communication channel for communicating the information, e.g. transmitting a message to a mobile wireless device of the assisted person instead of outputting the information via speech using a loudspeaker. In an alternative approach, the personal assistance application may, based on the estimated privacy context, edit or modify the content of the information in order to reduce the sensitivity of the information before communicating the information. This may include replacing actual names of persons or modifying the terminology of a text to a more abstract level in order to avoid disclosing sensitive information.

However, the personal assistance application will fail in its approach in scenarios, in which no alternative communication channels are available. In some instances, there exists no communication channel with an increased privacy level compared to speech. Moreover, modifying the content of the information is not always possible without affecting adversely the intended purpose of the communication. Adapting the information may result in omitting details of the content rendering the resulting information insufficient to achieve the target of the communication.

Considering the discussed aspects, the current state of the art is insufficient for providing assistance by communicating information and handing objects in public environments while simultaneously complying with required levels of privacy.

The system for improving privacy of independent claim 1 in a first aspect, a corresponding autonomous device in a second aspect including the system of the first aspect, an assistance method, and a computer program of the corresponding independent claims provide advantageous solutions to the problem.

The dependent claims define further advantageous embodiments.

In the first aspect, the system for improving privacy of information to be communicated or an action to be performed by an autonomous device comprises a perception module configured to obtain information on an environment based on sensor information acquired by at least one sensor sensing the environment of the autonomous device. The system further includes a processor configured to determine, based on the obtained sensor information, whether communicating information or performing an action is requested by a user from the autonomous device, or is beneficial for the user. The processor is further configured to determine a privacy level of the information to be communicated or the action to be performed based on the information or the action, and to estimate a privacy impact for communicating the information or performing the action in the environment based on the information on the environment and the information to be communicated or the action to be performed. The processor is further configured to plan a behavior of the autonomous device. The processor is further configured to generate a control signal to the autonomous device based on the planned behavior and to output the generated control signal to at least an actuator of the autonomous device. The system includes the processor further configured to analyze the information on the environment for determining modification options in the environment of the autonomous device that improve the privacy impact, and to plan the behavior of the autonomous device to perform at least one modification option of the determined modification options. The planned behavior includes a physical manipulation of at least one physical object in the environment. Additionally or alternatively, the performed at least one modification option includes a social manipulation for adapting the privacy impact by modifying the common environment of the autonomous device and the user.

The privacy level may refer to a required privacy level, to a privacy score, or a privacy measure, and define a quantifiable measure for describing the level of privacy that is attributable to the information content.

The system of the first aspect provides an autonomous device, e.g. a robotic assistant, with the capability to analyze a privacy state of the environment in which the autonomous device and the assisted person are situated and to determine the sensitivity of information content. The system uses the gained knowledge on the privacy state of the environment in combination with the determined privacy sensitivity of the information content to mitigate a privacy impact of the communicative behavior by manipulating the communicative setting of the environment, e.g. by changing a location, by closing a door, by manipulating the social context, for example, or any combination of the named actions.

The autonomous device is provided with communication capabilities, which can deliver information to a user or an assisted person (target person, recipient) in a social and public environment without compromising privacy of the communicated information. The autonomous device achieves this target by analyzing the environment with regard to the privacy impact of intended communication output behaviors and determining (estimating) an environmental privacy state. The autonomous device uses the determined environmental privacy state to manipulate the physical environment in order to deliver personal, sensitive and/or confidential information safely to the recipient.

The environmental privacy state for instance reflects the risk that parts of the information or all information can be leaked to people other than the information target.

The system analyzes the environment for manipulation opportunities, which can adapt or mitigate the privacy impact, and thereby may reduce the risk of leakage of the information during communication. The system chooses one or more modification options (manipulation options) to reach an adequate level of privacy safety for the communication behavior. If the system determines that no modification option for reaching an adequate level of privacy exists, the system may determine not to communicate the information.

Environmental manipulations improving the privacy state may include changing a location and a pose of the autonomous device. The environmental manipulations may include physical manipulation like picking, carrying and placing physical objects or otherwise manipulating physical objects and items in the environment, e.g., closing doors and lowering blinds. Alternatively or additionally, the manipulations may include a social manipulation like requesting people to leave the room via a respective speech output.

The system according to first aspect applies comparable strategies, as human beings would do intuitively or at least ideally in similar circumstances in order to guard privacy or confidentiality of information. The human might use physical manipulation skills of the embodied environment or social manipulation skills to mitigate or adapt the privacy impact, e.g. resulting in a change of location, decreasing a distance, or closing doors. The system according to the first aspect devises similar strategies in order to mitigate or adapt the privacy impact. Contrary to the known approaches, which are restricted to selecting another communication channel or modifying the content and hence fail in some situations, the system according to the first aspect extends to modifying the common environment of the autonomous device and the user as recipient of the information intended for communication.

Hence difficult situations in which no other communication channel is established, or modifying the content of the information reduces the details of the information to an extent that the resulting information content is insufficient for achieving a target of the communication, which overstrain the known approaches, are addressed by the system according to the first aspect.

The system according to an embodiment has the processor configured to determine a privacy impact score for each communication channel of plural communication channels available for communicating the information in the environment including the modifications, and to select the communication channel with the best privacy impact score.

The system of an embodiment includes the physical manipulation comprising at least one of closing a door, shutting a window, drawing a curtain, lowering a blind, dimming a light, turning of a light, changing an ambient light level, moving a physical object, playing background noise, and blocking view of another person or shading a light using a body or a body part of the autonomous device.

The cited manipulations individually or in combination enable to improve a privacy level of the environment.

The planned behavior of an embodiment of the system includes an indirect physical manipulation of at least one physical object, of at least one person or of the user in the environment, wherein the action includes generating and outputting a request or a prompting action to the user or the person to perform the physical manipulation of the at least one physical object, the person or the user.

The system may thereby increase the privacy level of the environment although the physical manipulation is not within its available range of actions.

A prompting action may include a human gesture, which induce humans to perform an action, e.g. coming closer to the autonomous device, so that the information to be communicated may be delivered audibly with a lower level of volume.

The outputted request may include, for example, asking the user or at least one other person to close the door.

The outputted request may include, for example, asking the user to come with the autonomous device to a more private setting, e.g. another room, or asking the at least one other person present in the environment together with the target person to leave.

The outputted request may include, for example, asking the user to come closer to the autonomous device or to lean towards the autonomous device.

The system according to an embodiment includes the planned behavior comprising an embodied communicative manipulation comprising at least one of the autonomous device moving or leaning towards (closer to) the user, approaching the user, selecting another communication channel for at least a part of the output information, and blocking a line-of-sight using a body or a part of the body of the autonomous device. Alternatively or additionally, the planned behavior includes an embodied communicative manipulation comprising at least one of generating and outputting a request to another person to move to another location, to the user to move to another location together with the autonomous device, or outputting a statement to other persons requesting privacy of the autonomous device with the user.

The other communication channel may include, e.g., using one or more gestures for communicating a critical part of the information with respect to privacy aspects.

An autonomous device according to the second aspect comprises the system for improving privacy of a communication or an action of the autonomous device according to the first aspect. The autonomous device comprises the at least one sensor, and at least one of the at least one actuator configured to perform the action, and at least one output device configured to output the information to be communicated in at least one communication channel.

The autonomous device according to an embodiment has the at least one sensor comprising at least one of a camera, an infrared sensor, a LIDAR sensor, a RADAR sensor, a touch-sensitive sensor, a motion sensor for measuring a device motion parameter, and a communication transceiver for communication between devices.

The touch-sensitive sensor may be a capacitive sensor, for example.

The motion sensor may be a torque sensor, for example.

The communication transceiver may include, e.g., a wireless transceiver, a near field communication (NFC) transceiver), a Bluetooth^{RTM} transceiver, and a wireless local area network (WLAN), a Wi-Fi ^{RTM} transceiver, or a combination thereof.

According to an embodiment of the autonomous device, the at least one output device comprises at least one of a display, a projector, a light emitting device, an animated human-like face, or a communication means for transmitting the information to be communicated for outputting to a public display or speaker.

The communication means of the output device may be the same structural element as the communication transceiver of the at least one sensor.

The autonomous device according to an embodiment includes the actuator comprising at least one of a robot arm for manipulating objects in the environment and a movable base for moving the autonomous device in the environment.

The movable base may include controllable drive means including, but not limited to, at least one motor and wheels, tracks, belts, or legs driven by the at least one motor for moving the autonomous device in the environment.

According to an embodiment of the autonomous device, the autonomous device includes at least one robot, multiple robots (robot swarm), an electronic toy, an unmanned aerial vehicle (UAV), an unmanned ground vehicle, an unmanned sea vehicle, a distributed smart system, a smart heating system, an alarm system, a door intercom system, a smart lighting system, an electric door opening device, an electronic blind, an electronic shading device, a radio, a smart TV, a smart electronic control device, and a smart power supply.

A distributed smart system may be a smart home system including at least one smart home device.

The computer-implemented method for improving privacy of information to be communicated or an action to be performed by an autonomous device according to the third aspect comprises obtaining information on an environment based on sensor information acquired by at least one sensor sensing the environment of the autonomous device. The method proceeds with determining, based on the obtained sensor information whether communicating information or performing an action is requested by a user from the autonomous device, or is beneficial for the user; and determining a privacy level of the information to be communicated or the action to be performed based on the information or the action, and estimating a privacy impact for communicating the information or performing the action in the environment based on the information on the environment and the information to be communicated or the action to be performed. The method plans a behavior of the autonomous device. The method includes generating a control signal to the autonomous device based on the planned behavior and outputting the generated control signal to at least an actuator of the autonomous device. The method analyzes the information on the environment for determining modification options in the environment of the autonomous device that improve the privacy impact, and plans the behavior of the autonomous device to perform at least one modification option of the determined modification options. The planned behavior includes a physical manipulation of at least one physical object in the environment. Additionally or alternatively, the performed at least one modification option includes a social manipulation for adapting the privacy impact by modifying the common environment of the autonomous device and the user.

The computer program according to the fourth aspect comprises instructions, which, when a computer executes the computer program, cause the computer to carry out the method according to the third aspect.

The computer implemented method according to the third aspect and the computer program according to the fourth aspect yield corresponding effects and advantages as discussed with reference to the system according to the first aspect and the autonomous device according to the second aspect and vice versa.

The following description of embodiments refers to the figures, in which
Fig. 1 shows a simplified block diagram of a system according to an embodiment;
Fig. 2 presents a flowchart of a method for communicating information in an embodiment;
Fig. 3 shows a simplified block diagram of a privacy-impact estimation module according to an embodiment;
Fig. 4 shows a simplified block diagram of an environment manipulation module according to an embodiment;
Fig. 5 presents a flowchart of a method for presents a flowchart of a method for handing a physical object to a person in an embodiment; and
Fig. 6 presents a flowchart of an embodiment applied in a smart home application scenario.

In the figures, corresponding elements have the same reference signs. The discussion of the figures avoids discussion of same reference signs in different figures wherever considered possible without adversely affecting comprehensibility and avoiding unnecessary repetitions for sake of conciseness.

The description of the figures uses specific terms, which are shortly summarized for convenience.

The term recipient denotes a human (target person) who is present in a same physical space (same environment) as the autonomous device. The human is supposed to receive the information to be communicated.

A requestor is a human that potentially triggers the transmission or delivery of information or a delivery or handover of a physical object to the recipient.

The term user denotes a human that interacts with the autonomous device, either as a requestor or as a recipient.

An information delivery task is a task including informing about or pointing out something using a communication interface of the autonomous device to recipients. The recipients can be one user or plural users. A request by another user usually triggers the information delivery task that in most scenarios involves searching for and identifying the recipient of the information to be communicated.

A social or public environment is a physical space, in which plural persons with various personal and professional relations are simultaneously present or come together.

The expression privacy safe environment denotes an environment that is privacy safe when a required privacy level of information to be communicated is matching the intended privacy level relative to the intended communication modality. The state privacy safe is the optimal, e.g. desired, environment state for the environment when communication of the information occurs.

Privacy impact describes an evaluation of an action performed by the autonomous device by a person with respect to a violation of their privacy expectations. The privacy impact has, e.g. a negative rating when information about a medical history of the user is shared with their employer.

The expression information includes anything that carries or implies an effect with respect to the privacy expectations of the user. Information may include, e.g., words, texts, physical objects, or gestures. Information denotes both an aspect of a speech utterance but also a semantic context or content of a physical object, e.g. a physical object such as written text intended for delivery.

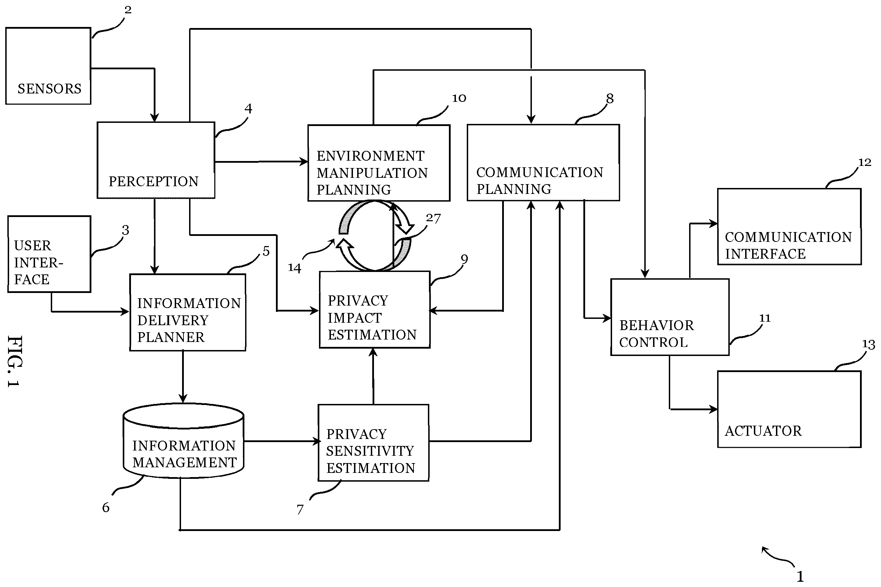

Fig. 1 shows a simplified block diagram showing a system 1 according to an embodiment.

The system 1 as shown in fig. 1 forms part of an autonomous device. In the depicted specific embodiment, the system 1 may be implemented in a plurality of software modules running on respective hardware of the autonomous device, e.g., including at least one processor and associated memory.

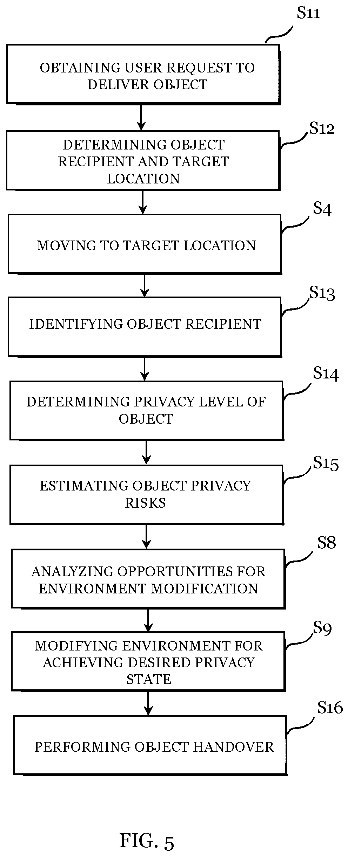

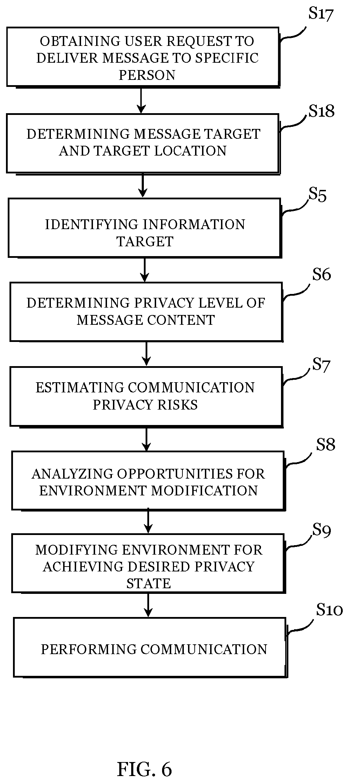

In an alternative embodiment, the system 1 may include an actuated electronic device. Examples for actuated electronic devices capable to interact with their environment are discussed with reference to figures 5 and 6.

The system 1 discussed with reference to fig. 1 may be a mobile autonomous device capable to move in the environment with a movable base controlled by a mobility control unit. The autonomous device may perform a variety of tasks using actuators 13 and a communication interface 12 for communication with a user and other persons present in the environment of the autonomous device.

The autonomous device has a device body not indicated in fig. 1 and therefore forms physically part of its environment. The device body may obstruct views in the environment by means of its physical extension into three dimensions, and its position and orientation relative to other persons.

The system 1 of fig. 1 uses sensors 2 (sensor suite 2) and a user interface 3, which most autonomous devices have at their disposal.

The sensors 2 acquire sensor signals from the environment. The sensors 2 may include visual sensors, e.g. cameras, LIDAR sensors, RADAR sensors, acoustic sensors in the human audible range or ultrasonic range, e.g. microphones, tactile sensors, for naming some examples for sensors 2 suited for acquiring sensor information from the environment and for a perception module 4 obtaining information on the environment based on the sensor information.

The sensors 2 of the autonomous device may also include motion and positioning sensors of the autonomous device that provide location information, orientation information and movement information of the autonomous device in the environment. The sensors may include at least one of an inertial movement unit (IMU), a velocity sensor, an odometer, and a global navigation satellite system receiver (GNSS).

The sensors 2 may include a communication transceiver, e.g. for receiving information from building infrastructure using wireless local area network (WLAN) communication, e.g. Wi-Fi^{RTM}, Bluetooth^{RTM} communication, near field communication (NFC), or light communication using Li-Fi in order to name some specific examples.

Additionally, the system 1 as shown in fig. 1 also includes a communication interface 12 and an actuator 13, which are also present in many examples of autonomous devices. A behavior control module 11, e.g. implemented in software on a main control unit of the autonomous device, controls both the communication interface 12 and the actuator 13.

The sensors 2 provide sensor information to a perception module 4 of the system 1. The perception module 4 obtains the information on the environment of the autonomous device based on the sensor information acquired by the at least one sensor 2 sensing the environment of the autonomous device. The information on the environment may include information on presence of other persons in the environment. The information on the environment may include information on a state of a door or a window. The state of the door or window may in particular include an open state or a closed state.

The perception module 4 may generate an environment representation. The environment representation may include information on a spatial layout of the environment, e.g. of a room in a building. The environment representation may include location, orientation, and movement information of the autonomous device. The environment representation may include location, orientation, and movement information of persons present in the environment. The persons present in the environment include a person, which is a recipient of an intended or requested information communication by the autonomous device.

Information on the spatial layout of a room in the building may include information on a spatial arrangement of physical elements, e.g., of windows, doors, openings to adjacent rooms, corridors, or outdoor areas adjacent to the building. The information on the spatial layout of a room may further include information on a state of the physical elements, e.g., including whether a window or door is open or whether the window or door is closed.

The information on the environment may include information on light, in particular on an ambient light level in the environment.

The information on the environment may include information on noise, in particular on a background noise level in the environment.

The information on the environment includes information on presence of persons, e.g. information on location, orientation, and identity of the persons present in the environment of the autonomous device. The information on presence of persons may include information on an occupation state of the persons, including, e.g., reading, phoning, talking, or sleeping.

The perception module 4 generates the information on the environment for a current point in time. The perception module 4 may also obtain, in particular predict or generate information on the environment for a future point in time, e.g. by performing a prediction process based on the sensor information, in particular including a predicted environment representation incorporating changes due to movement of persons in the environment or due to modifications due to actions performed by the autonomous device.

The perception module 4 stores the information on the environment in a memory of the autonomous device. The perception module 4 provides the information on the environment to other modules of the autonomous device, including an information-delivery planning module 5, a privacy-impact estimation module 9, an environment-manipulation planning module 10, and a communication planning module 8.

The perception module 4 may be implemented in software running on suitable hardware of the autonomous device, comprising, for example, a main control unit of the autonomous device.

The main control unit of the autonomous device may include at least one processor, e.g. a microcontroller, and associated memory, e.g. read only memory (ROM), random access memory RAM, disk memory, flash memory for respectively storing program data, data generated during execution of software, and application data.

The system 1 includes the information-delivery planning module 5. The information-delivery planning module 5 determines when, to whom (which person) and which information (information content) the autonomous device is required to communicate (information to be communicated, intended communication, envisaged communication, planned information communication).

The information-delivery planning module 5 may determine the intended communication of information based on an explicit request of a person, e.g. a user.

The system 1 may include the user interface 3, which is configured to obtain requests, queries or instructions from the user. The user interface 3 may be implemented using a microphone as sensor 2 and software modules running on the processor for performing speech recognition and command interpretation based on auditory data acquired by the microphone.

Alternatively or additionally, the system 1 may determine the intended communication of information based on a predetermined event (reminder, trigger event) detected in the environment via the sensors 2 and the perception module 4.

The system 1, in particular the information-delivery planning module 5 may detect the trigger event for determining the intended communication of information based on an elapsed time interval or a set timer.

The information-delivery planning module 5 may determine the intended communication of information based on detection of a need of a user. The information-delivery planning module 5 may, e.g., determine based on sensor information acquired from the environment via the sensors 2 and the perception module 4 that a person is lacking a task-relevant piece of information, or predict that the person could benefit from a specific information.

The information-delivery planning module 5 of fig. 1 is discussed with reference to communicating information to a target person. Nevertheless, it is noted that a corresponding embodiment uses the system 1 for delivering physical objects. In particular in cases, in which the physical object implies certain information or has a privacy relevance, e.g., documents, photographic prints, personal items, drugs revealing health-related issues on a person, a corresponding information delivery by physical object handover from the autonomous device to a target person is understood to be encompassed by the term information communication.

The system comprises an information management module 6 (information handling module 6), which stores information that is generated based on at least one of sensor information of the sensors 2, explicit user input via the user interface 3, or access to external information sources, e.g. a cloud storage. The information management module 6 retrieves the stored information from memory, e.g., a local data storage of the system 1 or external memory, e.g. cloud storage, and provides retrieved information to other modules, e.g. a privacy-sensitivity estimation module 7 or a communication-planning module 8 of the system 1.

The privacy-sensitivity estimation module 7 analyzes the content of a planned information communication output (target information) based on a sensitivity scoring system. The privacy-sensitivity estimation module 7 provides the target information associated with a corresponding privacy score to the privacy-impact estimation module 9.

Analyzing the content in a sensitivity scoring system (sensitivity analysis) can include using a machine learning-based sensitive text classifier for identifying sensitive categories in the target information. The machine learning system can perform a supervised learning, unsupervised learning, or reinforcement learning process, e.g. for training a sensitive text classifier. The sensitive text classifier may be trained on a human-labeled text corpus. The text corpus may be created by manually assigning sensitivity levels to texts of a plurality of texts, for instance by asking persons about the sensitivity of a given information content in a privacy spectrum including plural different sensitivity levels. The spectrum can for instance contain three sensitivity levels, reaching from a low sensitivity, via a moderate sensitivity to a high sensitivity level. The machine learning system learns a model representing the relationship between language features, e.g., keywords and keyword combinations in texts, and corresponding sensitivity levels attributable to the text. During runtime, the system may label planned communication output according to the respective sensitivity levels.

A sensitive text classifier may be trained based on human user feedback in a training phase. Additionally or alternatively, the sensitive text classifier may be trained based on implicit or explicit human feedback in an application phase.

In a specific application scenario, the system determines that reminding a person about an upcoming doctor's appointment is beneficial. The reminding message contains the keyword "urologist", which is associated with health content. Health content is learned as highly sensitive using human labeled data in a supervised learning process. If a message does not contain keywords or specific language for moderate or highly sensitive information, it is classified as having a low sensitive level or being low sensitive.

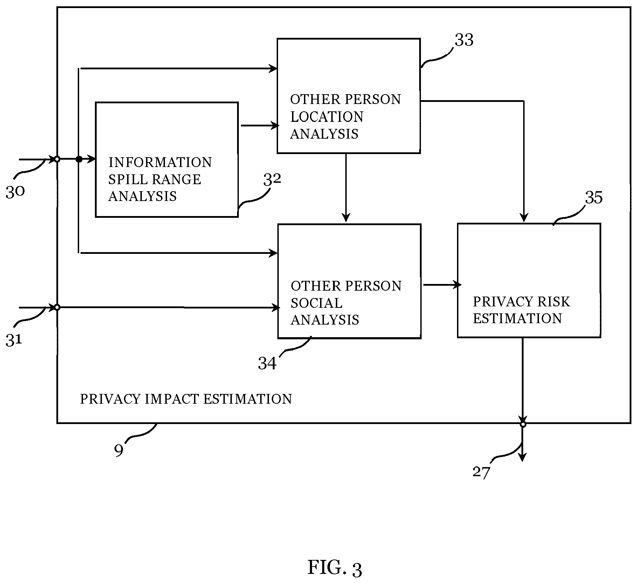

The sensitivity levels may include a plurality of levels with significantly larger number of gradations than discussed before. The system 1 comprises the privacy-impact estimation module 9. The privacy-impact estimation module 9 is discussed in more detail with reference to fig. 3 below.

The privacy-impact estimation module 9 evaluates a current privacy state of the environment of the autonomous device based on an analysis of the current situation as represented by the current information on the environment. In particular, the privacy-impact estimation module 9 evaluates if and how much a target person's privacy expectations are violated in case of communicating the target information, and determines a risk score for a violation.

An environmental analysis of the current situation may involve image analysis to identify individuals detected in the environment, assess their relationships, and analyze a room. Analyzing the room may include determining its purpose, for instance to ascertain its public or private nature. Analyzing the room may include evaluating a status of physical environmental factors having impact on planned communication, e.g., the state of doors and blinds. For instance, the privacy-impact estimation module 9 may evaluate the current privacy state of the environment of the autonomous device based on an analysis of the current situation to represent a fully private state, when no other person except the target person is present in a room. Simultaneously the probability of an unintended disclosure with the planned communication modality due to a closed door of the room is low.

The privacy-impact estimation module 9 may use for the evaluation a machine learning system, which can include supervised learning, unsupervised learning, or reinforcement learning processes. Environmental analysis can, for instance, be trained in a training phase on a plurality of images, which had been labeled by a human. The plurality of images represent a corpus that is created by manually assigning labels about, e.g., the public and private nature of the space and social situations depicted in the image content to image data. The system learns the relationship between visual features and the environmental state, which can then be used for unlabeled image data during the application phase (during runtime) to determine the environmental privacy state of the hitherto unlabeled images obtained in the application phase. The privacy-impact estimation module 9 may store trust relations between persons, and which information is known by which person for a tracking over time. The situation includes, e.g., presence and identity (type) of other persons in the environment, and their relative position to the target person, physical structures and their influence on how information output by the autonomous device in a particular communication channel is perceivable by other persons. The privacy-impact estimation module 9 may generate a model for the propagation of sound in the environment of the autonomous device, determine angles of human visual perception, or determine a social situation based on information including, e.g. trust or relationships between the target person and other persons. The privacy-impact estimation module 9 may generate predictions on what other person may do with the perceived information. The privacy-impact estimation module 9 may assess whether such illicit disclosure and spread of the target information may cause harm. The privacy-impact estimation module 9 may also determine whether the target information is already known to the other person or even publicly available.

Additionally, the privacy-impact estimation module 9 may consider an information content type. The information content type may include, e.g., medical type, business type, and personal type of information content. The personal type of information refers to information content that is related to a specific person.

Additionally, the privacy-impact estimation module 9 may analyze possible modalities to convey the information to the target person, e.g., displaying the target content on a display screen in case of an image.

Additionally, the privacy-impact estimation module 9 may consider the privacy impact for the target person (recipient) of the information. Additionally, the privacy-impact estimation module 9 may further assess an impact for at least one of the requestor, which requests communication of the target information, and possible third parties that have relation with the target information.

The privacy-impact estimation module 9 may in order to determine the privacy impact, use a multi-dimensional probability function for determining the privacy score. The multi-dimensional probability function may include, in a first element, a space factor distinguishing between a private, a semi-private, and a public space. The multi-dimensional probability function may include, in a second element, a trust- relationship dimension distinguishing between an intimate relationship, a well-known relationship and an unknown relationship between persons detected in the space. The multi-dimensional probability function may include, in a third element, an "information availability"-dimension distinguishing between generally known information, unknown information, and uncertain information. The risk score multi-dimensional probability function may set each element corresponding to a factor with a respectively different weight.

In a specific example, determining the weights may result in the privacy score remaining low, regardless of other factors or the sensitivity of the information involved, when a situation is deemed fully private.

The privacy-impact estimation module 9 provides the results of the analysis to the environment-manipulation planning module 10. The processing of the privacy-impact estimation module 9 and the environment-manipulation planning module 10 are at the core of system 1. Their respective processing is closely related and may be performed in plural repetitions and iterations during the processing flow of the communication planning process of the system 1.

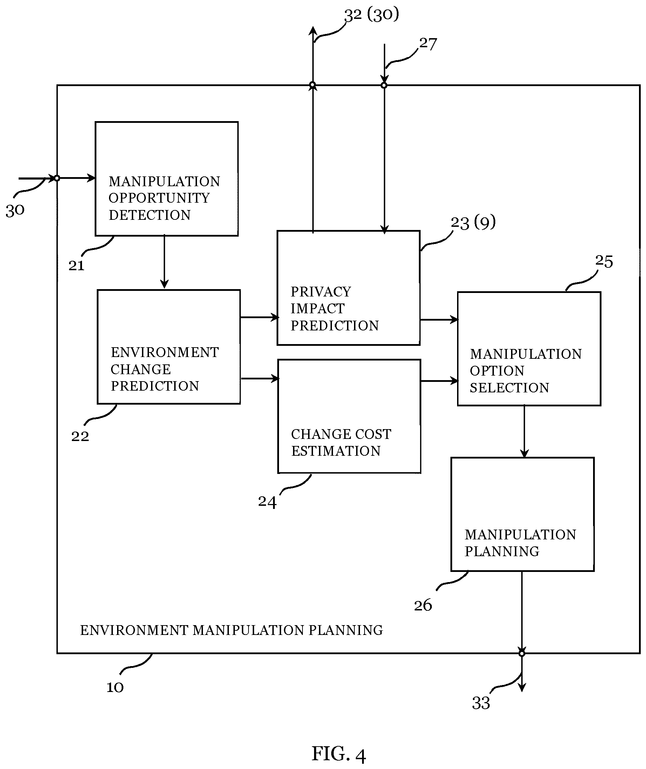

The environment-manipulation planning module 10 is discussed in more detail with reference to fig. 4 below.

The environment-manipulation planning module 10 obtains environment information from the perception module 4 and target information intended for communication associated with the estimated privacy score from the privacy-impact estimation module 9.

The environment-manipulation planning module 10 evaluates the current situation in the environment based on the environment information, e.g. the current information on the environment with respect to possible changes (modifications) to the current situation, which affect the communication scenario for the target information. The environment-manipulation planning module 10 in particular determines manipulation opportunities (manipulation candidates, manipulation options) for the autonomous device to modify by an action or a specific communication the current situation in the environment tom improve the privacy of the intended communication or to achieve that the targeted privacy level is achieved.

Possible changes in the environment in this respect comprise, e.g., closing of a door, closing of a window, changing position of persons, either of the target person or of other persons, moving and changing the position of the autonomous device, changing the position of physical objects in the environment, change of location of the environment, e.g. relocating to another room, change of relative positions of the autonomous device and the target person,

The environment-manipulation planning module 10 predicts the impact of the possible changes on an environmental privacy state of the environment. The environment-manipulation planning module 10 may use the privacy-impact estimation module 9 to assess hypothetical changed situations and the resulting impact on the privacy. Alternatively or additionally, the environment-manipulation planning module 10 may use an explicit model for estimating the impact of the possible changes on the privacy.

The environment-manipulation planning module 10 may refer to stored parameters defining its own capabilities, e.g. that the autonomous device can only move objects of a certain maximum weight as a constraint during evaluation and determining of manipulation opportunities.

Alternatively, regarding own capabilities of the autonomous device may form part of an opportunity evaluation.

The environment-manipulation planning module 10 determines (selects) a target environment state based on selecting certain manipulation options from the available range of determined manipulation options in order to determine measures for maintaining privacy when communicating the target information. Criteria for selecting manipulation options by the environment-manipulation planning module 10 may base on, e.g., a quantification of the required changes, an estimated required energy for the autonomous device to create the new situation by performing the selected manipulation correspond to actions of the actuators 13, an expected improvement of the estimated privacy state, e.g. as estimated by the privacy-impact estimation module 9 for the respective manipulation option, estimated cost for other persons in the environment, or a combination or sub-combination of these or other criteria.

The environment-manipulation planning module 10 subsequently generates a behavior plan, which is optimized to arrive the desired environment changes in the environment. The behavior plan corresponds to a manipulation, which comprises one or a plurality of actions performed by the actuators 13 of the autonomous device in order to perform the selected manipulations.

The environment-manipulation planning module 10 corresponds to a behavior-planning module and may use known planning algorithms, including motion/path planning, object grasp/manipulation planning, human-robot interaction planning, or communication planning.

Communication planning as part of the behavior planning by the environment-manipulation planning module 10 may use the communication planning module 8 as discussed next.

The communication planning module 8 of the autonomous device determines how the autonomous device communicates the target information to the target person in the environment that includes the modifications according to the manipulation behavior.

The system 1 comprises at least one behavior control module 11 that receives as input a behavior plan or a communication plan and controls the actuators 13, the communication interface 12, e.g. loudspeakers and other output devices to perform the planned behavior and the target communication.

The system 1 may optionally include a learning module not depicted in fig. 1, which may receive feedback on the actual privacy appropriateness of the executed behavior of the autonomous device. The feedback may come from the user, e.g. via the user interface 3 from the target person, the requestor of the target communication. Alternatively or additionally, the feedback and learning module may obtain the feedback by interpreting observed reactions of persons in the environment and consequences resulting from the executed behavior and communication. The learning module may use the obtained feedback to improve the privacy-sensitivity estimation module 7, the privacy-impact estimation module 9, and the environment-manipulation planning module 10 and their respective processing.

Optionally, the privacy-sensitivity estimation module 7, privacy-impact estimation module 9 and the environmental-manipulation planning module 10 offer the possibility to be applied in direct person-to-person communication scenarios. This includes analyzing the privacy level of the content (content-sensitivity) of the conversation, estimating the privacy impact of the conversation environment and changing the conversation environment to achieve an optimal or appropriate environmental privacy state for the conversation.

The system 1 comprises the communication interface 12 as mentioned. The communication interface 12 enables the autonomous device to provide information to one or plural persons in the environment with one or more modalities of communication including speech, visual display, or facial expressions of a human-like face of the autonomous device, of gestures by robotic arm(s) of the autonomous device, for example. The communication interface 12 is a human communication interface and may comprise one or more displays for visual output of information, one or more loudspeakers for audible output of information, or an artificial animated human-like face. The communication interface 12 may use other means including robotic arms as specific examples for actuators 13 of the autonomous device for signaling visually the target information and other information to the user and other persons, which are present in the environment. The communication interface 12 may use the other means including robotic arms as an example of the actuators 13 equipped with suitable end-effectors for a haptic signaling the information to the user and other persons, which are within a close range of the autonomous device and may be reached physically with the robotic arm, for example.

The system comprises the actuator 13 or a plurality of actuators 13. The actuator(s) 13 include actuator(s) 13 for moving the autonomous device in the environment, e.g. using tracks, belts, wheels, or a combination thereof driven by motors and controlled by the control unit of the autonomous device, in particular the behavior control module 11. By moving in the environment, the autonomous device is able to change (modify) the environment physically, e.g. by moving itself to another location, to change an orientation of the autonomous device in the environment.

The actuator(s) 13 may include at least one robotic arm mounting an end-effector (manipulator). The robotic arm represents a primary means for the autonomous device to manipulate the environment physically. By manipulating the environment physically, the autonomous device is able to change (modify) the environment physically, e.g. by moving physical objects, closing windows , closing doors, operating switches, turning knobs, pressing buttons, for example.

A typical application of the system 1 include at least two cycles of the processing flow along the edges and modules of system 1 illustrated in fig. 1. In a first cycle, the system 1 detects and analyses an information communication task, determines manipulation options for adapting the environment to ensure sufficient privacy, selects a suitable manipulation option, and adapts the environment based on the selected manipulation option. After changing the environment in the first cycle, the system 1 proceeds with a second cycle, in which the system 1 determines (classifies) the environment as privacy safe and proceeds with communicating the information to the target person.

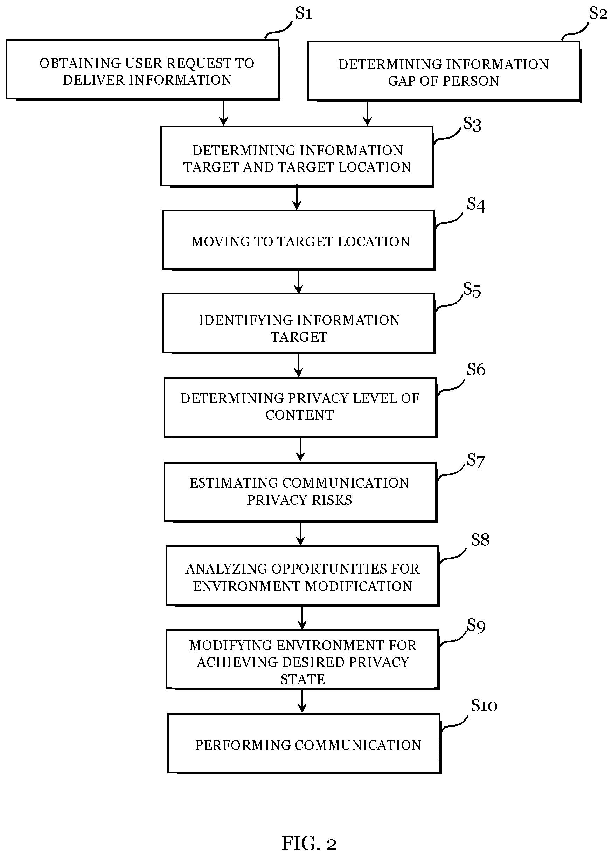

Fig. 2 presents a flowchart of a method for communicating information in a specific embodiment. The embodiment concerns an exemplary application of the system 1 for communicating (delivering) information to a person.

Before discussing the method steps executed by the system 1, the exemplary application scenario is shortly summarized.

A person addressing the task of organizing and inviting to a meeting, e.g. in a business environment is unsure if all persons invited to participate in the meeting recognized a late and urgent update of the meeting time and meeting schedule. The inviting person requests an autonomous assistance device (robotic assistant) to inform one of the invited participants who has not responded that the meeting set a to start at a given time will take half an hour longer because of an additional agenda item with the headline "staff savings".

In step S1, the autonomous device obtains the request by the organizing person to deliver the information of the additional agenda item with the headline "staff saving" to the invited participant who failed to acknowledge the updated meeting time and schedule.

Alternatively, the robotic assistant may determine in step S2 that all but one of the invited participants of the scheduled meeting acknowledged the message including the updated meeting time and meeting schedule including the additional agenda item. The robotic assistant determines a (possible) information gap of the invited person who failed to respond in time.

The robotic assistant may perform this step by accessing the electronic e-mail and organizing system of the company and evaluating the messages stored in the e-mail, calendar, and organizing system with regard to the scheduled meeting.

In step S3 succeeding to step S1 or step S2, the robotic assistant determines an information target and a target location.

The robotic assistant may identify in the specific exemplary scenario, the target location of the invited person, who failed to respond representing the information target or recipient for the target information from an internal company database storing the current seating plan of the staff.

In step S4, the robotic assistant moves to the target location. The target location in the application scenario is an office where only the target person is present.

In step S5, after having arrived at the target location, the robotic assistant detects a person being present and identifies the person as the information target of the intended communication of information.

In step S6, the robotic assistant evaluates the information content of the information intended for communication. The robotic assistant determines that the target information includes with the additional agenda item "staff savings" a highly sensitive topic. The system 1 attributes therefore a high sensitivity score to the target information.

In step S7, the system 1 evaluates the communication privacy risks in the environment of the target location.

In the specific exemplary scenario, the robotic assistant recognizes an open door in the office of the target person. The open door creates the possibility that while the robotic assistant communicates the information to the target person via the acoustic channel, another person present in a space beyond the open door might overhear the message, and most crucially in terms of risk, the additional agenda item concerning potential staff savings.

In step S8, the robotic assistant analyzes the opportunities for modifying the environment at the target location.

The robotic assistant, in particular the system 1, may determine manipulation candidates for modifying the physical environment in order to reduce the risk of accidentally divulging confidential information to other persons than the target person may include closing the door. Other manipulation candidates may include decreasing a distance between the robotic assistant and the target person and reducing a volume of the acoustic communication of the target information. Yet another manipulation candidate may include changing the communication channel from acoustic communication to visual communication in combination with a careful selection of an orientation of a display screen with regard to the open door.

In the exemplary scenario, the robotic assistant, in particular the system 1, determines the manipulation option of closing the door to offer an acceptable solution for modifying the environment to arrive at a predicted maintaining an adequate privacy for communicating the information at acceptable cost.

In step S9, the robotic assistant modifies the environment for achieving the desired pricy state for communicating the information to the target person.

Hence, in the exemplary scenario, in order to reduce the risk, the robotic assistant uses its manipulation capabilities and closes the door before delivering the message.

In step S10, the robotic assistant performs the intended communication.

After analyzing the modified environment and concluding the risk of accidentally disclosing the critical additional agenda item, the robotic assistant communicates the message including the updated schedule and the additional agenda item is communicated.

Fig. 3 shows a simplified block diagram of privacy-impact estimation module 9 according to an embodiment.

The privacy-impact estimation module 9 obtains environment information 30 (information on the environment) from the perception module 4 as a first input.

The environment information 30 may include an representation of the current environment that includes information on a current location and orientation of the autonomous device, current location orientation and orientation of the target person, current location orientation and orientation of other persons present in the environment of the autonomous device, spatial layout of the environment, e.g. room layout, positions and state of doors, windows, existing passages to adjacent rooms, positions of physical objects in the environment such as items of furniture, ambient lighting conditions, availability and state of blinds.

The privacy-impact estimation module 9 obtains target information 31 from the privacy sensitivity estimation module 7 as a second input.

The privacy-impact estimation module 9 performs an information spill range analysis 32 based on the environment information 30. The information spill range analysis 32 generates a model or plural models to determine where information such as visual information and auditory information may be perceived when transmitted by the autonomous device in a specific manner. The specific manner may include, e.g., a loudness level of an auditory signal output via loudspeaker of the autonomous device. The specific manner may include, e.g., a viewing angle of a display used by the autonomous device to output visually information.

The information spill range analysis 32 determines in particular at which locations in the environment which information via which information channel is perceivable and provides the determined information in form of the generated model to the other person location analysis 33.

The other person location analysis 33 obtains the model from the information spill range analysis 32 and the environment information 30, including in particular the current location orientation, orientation data, and movement data of other persons present in the environment of the autonomous device. The other person location analysis 33 determines which other persons other than an intended recipient of the information are in a communication range when outputting communication to the recipient. The other person location analysis 33 may further predict whether other persons might appear within the communication range when outputting communication to the recipient. The other person location analysis 33 performs the prediction as well as the determination based on the acquired model from the information spill range analysis 32 and the environment information 30, including in particular the current location orientation, orientation data, and movement data of other persons present in the environment of the autonomous device. The other person location analysis 33 provides the generated information, which other persons are present or predicted to be present in the communication range to the other person social analysis 34 and the privacy risk estimation 35.

Based on the input from the other person location analysis 33 and the environment information 30, the other person social analysis 34 determines whether the identity of other person determined or predicted to be present in the communication range of the autonomous device is known. If the identity is known, the other person social analysis 34 determines the respective identity of the other persons present in the communication range.

The other person social analysis 34 evaluates, based on, in particular the input from the other person location analysis 33 the other persons whose identity is known, and the environment information 30, a potentially already existing knowledge concerning the information intended for output. The other person social analysis 34 furthermore evaluates, based on, in particular, the input from the other person location analysis 33 concerning the other persons whose identity is known, a possible interest or potential conflict of interest of the other person determined or predicted being present within the communication range.

The other person social analysis 34 evaluates, based on, in particular the input from the other person location analysis 33 concerning the other persons whose identity is known, and the environment information 30, a potential existing knowledge concerning the information intended for output.

The other person social analysis 34 evaluates, based on, in particular, the input from the other person location analysis 33 concerning the other persons whose identity is known, and the environment information 30, a possible social spillover of the information intended for output, e.g. by assumed gossip.

The other person social analysis 34 generates and provides the resulting information from the other person social analysis 34 to the privacy risk estimation 35. The privacy risk estimation receives also, as mentioned above, the information, which other persons are present or predicted to be present in the communication range.

The privacy risk estimation 35 predicts, based on the information, which other persons are present or predicted to be present in the communication range, and the information generated by the other person social analysis 34, a probability of a privacy violation (privacy expectation violation) and a severity of an impact in case the predicted privacy violation occurs. The privacy risk estimation 35 performs the prediction of the probability of a privacy violation (privacy expectation violation) and the severity of outcome for each of a requesting person requesting the communication of information, a recipient of the requested communication of information and each other person determined to be present in the communication range.

The privacy-impact estimation module 9 then outputs information in a signal 27 including the generated probability of a privacy violation (privacy expectation violation) and the severity of outcome for each of a requesting person requesting the communication of information, a recipient of the requested communication of information and each other person determined to be present in the communication range for further processing in the system 1. The system 1 uses the output information signal 27 including the calculated probabilities of a privacy violation and estimated severities of outcome of a privacy impact estimation in particular in the environment-manipulation planning module 10, which will be discussed in the following paragraphs.

It is to be noted that the processing in the privacy-impact estimation module 9 and the environment-manipulation planning module 10 may be repeated until a sufficient solution to the communication problem has been found, as indicated by the processing cycles 14 in fig. 14, or the envisaged communication (requested or triggered) communication of the information is aborted as now sufficient solution for the envisaged communication in the current environment could be identified.

Fig. 4 shows a simplified block diagram of the environment-manipulation module 10 according to an embodiment.

The environment-manipulation planning module 10 acquires also the environment information 30 from the perception module 4. The environment-manipulation planning module 10 further acquires the information signal 27 including the calculated probabilities of a privacy violation and estimated severities of outcome of a privacy impact estimation for each of the requesting user, the recipient and any other person within communication range.

The manipulation-opportunity detection 21 determines at least one or a plurality of manipulation options for the autonomous device to change or modify the environment in order to affect privacy-relevant parameter or a privacy-relevant configuration of the environment of the autonomous device based on the environment information 30 obtained from the perception module 4.

An environment change prediction 22 acquires the at least one or the plurality of manipulation options for the autonomous device to change or modify the environment and predicts for each manipulation option for the autonomous device the corresponding change in the environment. The environment change prediction 22 generates a predicted future environment information or a change of the current environment information for each of the determined manipulation options provided by the manipulation opportunity detection 21. The next processes use the environment information of each manipulation opportunity candidate provided by the environment change prediction 22 as an input. Both processes, a privacy impact prediction 23 and a change cost estimation 24 may be performed in parallel or sequentially. The privacy impact prediction 23 and the change cost estimation 24 analyze the individual manipulation opportunity candidate provided by the environment change prediction 22.

The manipulation option selection 25 selects a manipulation option from the plurality of manipulation options based on the change cost estimation and the privacy impact prediction for each of the manipulation option candidates available.

The manipulation planning 26 generates a target manipulation behavior 33 based on the selected manipulation option provided by the manipulation option selection 25.

Having selected the target manipulation behavior 33, the processing of the environment manipulation planning module 10 terminates.

The environment-manipulation planning module 10 outputs the generated target manipulation behavior 33 to the behavior control module 11 for generating the respective control signals for the communication interface 12 or the actuator 13 for execution based on the target manipulation behavior 33 generated in the environment-manipulation planning module 10.

Fig. 5 presents a flowchart of a method for handing a physical object to a person in an embodiment.

Before discussing the method steps executed by the system 1 and the autonomous device, the exemplary application scenario is shortly summarized.

A group leader (first group leader) requests the autonomous device (robotic assistant) to hand concept drawings of a new generation model of a product of a company to the group leader (second group leader) of another department. The requesting group leader (requester) puts the concept drawings into a closable basket attached to the robotic assistant. The requester specifies the delivery task by a verbal input to the user interface 3, which might state "Please hand these concept drawings to Mr. Hoffman in department C5".

In step S11, the robotic assistant obtains the request by the first group leader to deliver the object, in present scenario the concept drawing to the second group leader.

In step S12 following step S11, the robotic assistant determines a target person (object recipient) and a target location.

The robotic assistant identifies the target location of the target person by looking up the seating plan via accessing the internal company database.

In step S4 following to step S11, the robotic assistant moves to the target location. The target location in the application scenario is the office where target person is present. The target location is an office with multiple desks and a plurality of persons present.

In step S13 performed after step S4, after having arrived at the target location, the robotic assistant detects the persons being present and identifies one particular person as the target person and intended recipient of the concept drawings of the intended communication of information.

In step S14, the robotic assistant determines, in particular the system 1, a privacy level associated with the object intended for a handover to the target person.

The system 1 determines that "concept drawings" are a confidential document and should only be disclosed to the intended recipient. The system 1 attributes therefore a high sensitivity score to the target information.

In step S15, the robotic assistant, in particular the system 1, estimates a privacy impact for delivering the concept drawings in the environment at the target location for a handover to the target person.

The target location is an office with multiple desks. The system 1 analyzes the environment and estimates a privacy risk when the target person is taking the concept drawing out of the basket. One particular risk is that the object, in present scenario the concept drawings, might be seen by a person sitting at the desk next to the target person and therefore at a distance, which could be sufficient to see details of the concept drawing that are marked confidential.

In step S8, the system 1 analyzes the opportunities for modifying the environment at the target location.

The robotic assistant, in particular the system 1, may determine manipulation candidates for modifying the physical environment in order to reduce the risk of accidentally divulging confidential information to other persons than the target person when handing the concept drawing to the intended recipient.

The system 1 determines that blocking the view of the other person sitting adjacent to the intended recipient will enhance the privacy safety of the handover procedure. Having knowledge stored about its own physical dimensions, the system 1 determines that moving the robotic assistant between the target person and the other person and turning the orientation to the target person offer a manipulation option. The manipulation option offers the possibility of mitigating the risk of accidentally disclosing at least a part of the confidential information included in the concept drawing to the other person at acceptable cost to the system 1.

In the exemplary scenario, the robotic assistant, in particular the system 1, determines the manipulation option of moving between the recipient and the other person to offer an acceptable solution for modifying the environment to achieve an adequate privacy for handing the physical object to the intended recipient.

In step S9, the robotic assistant modifies the environment for achieving the desired privacy state for handing the physical object to the target person.

Hence, in the exemplary scenario, in order to reduce the risk, the robotic assistant uses its manipulation capabilities and moves between the target person and the other person and turns the orientation to the target person offer a manipulation option, thereby blocking the view of the other person on the crucial steps of the handover procedure for the concept drawings.

In step S16, the robotic assistant performs the handover of the concept drawings to the intended recipient. The actual delivery may then be carried out by asking the target person to take the concept drawings out of the transport basket.

Fig. 6 presents a flowchart of an embodiment applied in a smart home application scenario. The embodiment concerns a further exemplary application of the system 1 for communicating (delivering) information to a person.

Before discussing the method steps executed by the system 1, the exemplary application scenario is shortly summarized.

A smart home system, which includes an embodiment of the system 1, is supporting the inhabitants of a building also in the communication with the world exterior to the building. The support includes receiving and sending text messages. In the exemplary application scenario, an urgent message from a doctor is to be delivered to one of the inhabitants of the building.

In step S17, the smart home system obtains the request by a user (requesting person, requester) to deliver the urgent message by the doctor to a particular person inhabiting the building.

In step S18 following S17, the system 1 determines an information target and a target location.

The system 1 identifies the target person, which is sitting in her office and working on concept drawings. The smart home system is planning to deliver the message via the acoustic communication channel using loudspeakers arranged in in every room of the building.

In step S5, the system 1 identifies the information target. The system 1 detects a person being present and identifies the person as the information target of the intended communication of the urgent message.

For the privacy impact estimation, the system is detecting that another person in the house is in the kitchen for breakfast. The rooms are not next to each other, but the doors are open so a risk the message could be overheard is predicted.

In step S6, the robotic assistant evaluates the information content of the message intended for communication to the intended recipient. The system 1 estimates that the message content of the message, which has been received from the doctor, is sensitive. The system 1 attributes therefore a high sensitivity score to the target information.

In step S7, the system 1 evaluates the communication privacy risks in the environment of the target location.

In the specific exemplary scenario, the system recognizes an open door in the office of the target person. For the privacy impact estimation, the system 1 detects another person in the building is in the kitchen for preparing breakfast. The rooms are not next to each other, but the doors are open so a risk the message will be overheard is predicted.

In step S8, following step S7, the system 1 analyzes the opportunities for modifying the environment at the target location.

The robotic assistant, in particular the system 1, may determine manipulation candidates for modifying the physical environment in order to reduce the risk of accidentally divulging confidential information of the message to other persons than the target person may include closing the door.

Other manipulation candidates may include opportunities to limit the propagation of sound to persons other than the target person. As a result, the system selects the manipulation option including turning on the cleaning program of a smart coffee machine in the kitchen. The cleaning program increases the background noise level in the kitchen, which makes it impossible to hear the content of the loudspeaker communication output in the other room, in which the target person is working.

In the exemplary scenario, the system 1, determines the manipulation option of turning on the cleaning program of the smart coffee machine in the kitchen for increasing the background noise level in the kitchen as an suitable solution for modifying the environment to arrive at an adequate privacy for communicating the information, in this example the message, at acceptable cost to the target person.

In step S9, the robotic assistant modifies the environment for achieving the desired privacy state for communicating the information to the target person.

Hence, in the exemplary scenario, in order to reduce the risk, the system uses its manipulation capabilities of switching on the cleaning program of the smart coffee machine before delivering the message to the intended recipient via acoustic communication by the loudspeaker.

In step S10, the smart home system performs the intended communication.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps. The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

## Claims

1. A system for improving privacy of information to be communicated or an action to be performed by an autonomous device, the system comprising
a perception module (4) configured to obtain information on an environment based on sensor information acquired by at least one sensor (2) sensing the environment of the autonomous device;
a processor (5, 7, 8, 9, 10) configured to determine, based on the sensor information, whether communicating information or performing an action is requested by a user from the autonomous device, or is beneficial for the user; and
the processor (5, 7, 8, 9, 10) is further configured to determine a privacy level associated with the information to be communicated or the action to be performed based on the information or the action, and to estimate a privacy impact for communicating the information or performing the action in the environment based on the information on the environment and the information to be communicated or the action to be performed;
the processor (5, 7, 8, 9, 10) is further configured to plan a behavior of the autonomous device, and
the processor (5, 7, 8, 9, 10) is further configured to generate a control signal for the autonomous device based on the planned behavior and to output the generated control signal to at least one of an actuator (13) or an output interface (12) of the autonomous device, and the system is
**characterized in**
**that** the processor (5, 7, 8, 9, 10) is further configured to analyze the information on the environment for determining modification options in the environment of the autonomous device that improve the privacy impact, and to plan the behavior of the autonomous device to perform at least one modification option of the determined modification options, wherein
the planned behavior includes a physical manipulation of at least one physical object in the environment, and/or
the performed at least one modification option includes a social manipulation for adapting the privacy impact by modifying the common environment of the autonomous device and the user.

2. The system according to claim 1, wherein
the processor (9) is configured to determine a privacy impact score for each communication channel of plural communication channels available for communicating the information in the environment including the modifications, and to select the communication channel with the best privacy impact score.

3. The system according to claim 1 or 2, wherein
the physical manipulation includes at least one of closing a door, shutting a window, drawing a curtain, lowering a blind, dimming a light, turning of a light, changing an ambient light level, moving a physical object, playing background noise, blocking view of another person or shading a light using a body or a body part of the autonomous device.

4. The system according to any one of the preceding claims, wherein
the planned behavior includes an indirect physical manipulation of the at least one physical object or a person or the user in the environment, and
the planned behavior includes generating and outputting a request or perform a prompting action to the user or the person to perform the physical manipulation of the at least one physical object, the person or the user.

5. The system according to any one of the preceding claims, wherein
the planned behavior includes an embodied communicative manipulation comprising at least one of the autonomous device moving or leaning closer to the user, approaching the user, selecting another communication channel for at least a part of the output information, and blocking a line-of-sight using a body or a part of the body of the autonomous device, or
the planned behavior includes an embodied communicative manipulation comprising at least one of generating and outputting a request to another person to move to another location, to the user to move to another location together with the autonomous device, or outputting a statement to other persons requesting privacy with the user.

6. An autonomous device, comprising the system for preserving privacy of a communication or an action of the autonomous device according to one of the preceding claims, wherein the autonomous device comprises
the at least one sensor (2);
at least one actuator (13) configured to perform the planned behavior, or
at least one output device (12) configured to output the information to be communicated in at least one communication channel.

7. The autonomous device according to claim 6, wherein
the at least one sensor (2) comprises at least one of a camera, an infrared sensor, a LIDAR sensor, a RADAR sensor, a touch-sensitive sensor, a motion sensor for measuring a device motion parameter, a communication transceiver for communication between devices.

8. The autonomous device according to claim 6 or 7, wherein
the at least one output device (12) comprises a display, a projector, a light emitting device, an animated human-like face, or a communication means for transmitting the information to be communicated for outputting to a public display or speaker.

9. The autonomous device according to one of claims 6 to 8, wherein
the actuator (13) includes at least one of a robot arm for manipulating objects in the environment and a movable base for moving the autonomous device in the environment.

10. The autonomous device according to one of claims 6 to 9, wherein
the autonomous device includes at least one of a robot, multiple robots, an electronic toy, unmanned aerial vehicle, unmanned ground vehicle, unmanned sea vehicle, a distributed smart system, a smart heating system, an alarm system, a door intercom system, a smart lighting system, an electric door opening device, an electronic blind, an electronic shading device, a radio, a smart TV, a smart electronic control device, and a smart power supply.

11. A computer-implemented method for improving privacy of information to be communicated or an action to be performed of an autonomous device, the method comprising:
obtaining information on an environment based on sensor information acquired by at least one sensor (2) sensing the environment of the autonomous device;
determining, based on the sensor information, whether communicating information or performing an action is requested by a user from the autonomous device (S1), or is beneficial for the user (S2); and
determining a privacy level associated with the information to be communicated or the action to be performed based on the information or the action (S6), and estimating a privacy impact for communicating the information or performing the action in the environment based on the information on the environment and the information to be communicated or the action to be performed (S7);
planning a behavior of the autonomous device, and
generating a control signal to the autonomous device based on the planned behavior and to output the generated control signal to at least one of actuator (13) or an output interface (12) of the autonomous device (S9), and the method is
**characterized in** comprising
analyzing the information on the environment for determining modification options in the environment of the autonomous device that improve the privacy impact (S8), and
planning the behavior of the autonomous device to perform at least one modification option of the determined modification options, wherein
the planned behavior includes a physical manipulation of at least one physical object in the environment and/or
the performed at least one modification option includes a social manipulation for adapting the privacy impact by modifying the common environment of the autonomous device and the user.

12. A computer program comprising instructions, which, when a computer executes the program, cause the computer to carry out the method of claim 11.

## Patentansprüche

1. System zum Verbessern des Datenschutzes von zu kommunizierenden Informationen oder einer von einer autonomen Vorrichtung auszuführenden Aktion, wobei das System Folgendes umfasst:
ein Wahrnehmungsmodul (4), das dazu ausgelegt ist, Informationen über eine Umgebung basierend auf Sensorinformationen zu erhalten, die von mindestens einem Sensor (2) erfasst werden, der die Umgebung der autonomen Vorrichtung erfasst;
einen Prozessor (5, 7, 8, 9, 10), der dazu ausgelegt ist, basierend auf den Sensorinformationen zu bestimmen, ob das Kommunizieren von Informationen oder das Ausführen einer Aktion durch einen Benutzer von der autonomen Vorrichtung angefordert wird oder für den Benutzer von Vorteil ist; und
wobei der Prozessor (5, 7, 8, 9, 10) ferner dazu ausgelegt ist, ein Datenschutzniveau, das mit den zu kommunizierenden Informationen oder der auszuführenden Aktion assoziiert ist, basierend auf den Informationen oder der Aktion zu bestimmen und eine Datenschutzauswirkung für das Kommunizieren der Informationen oder Ausführen der Aktion in der Umgebung basierend auf den Informationen über die Umgebung und den zu kommunizierenden Informationen oder der auszuführenden Aktion zu schätzen;
der Prozessor (5, 7, 8, 9,10) ferner dazu ausgelegt ist, ein Verhalten der autonomen Vorrichtung zu planen, und der Prozessor (5, 7, 8, 9, 10) ferner dazu ausgelegt ist, ein Steuersignal für die autonome Vorrichtung basierend auf dem geplanten Verhalten zu erzeugen und das erzeugte Steuersignal an mindestens eines von einem Aktor (13) oder einer Ausgangsschnittstelle (12) der autonomen Vorrichtung auszugeben, und das System
**dadurch gekennzeichnet ist,**
**dass** der Prozessor (5, 7, 8, 9, 10) ferner dazu ausgelegt ist, die Informationen über die Umgebung zum Bestimmen von Modifikationsoptionen in der Umgebung der autonomen Vorrichtung, die die Datenschutzauswirkung verbessern, zu analysieren und das Verhalten der autonomen Vorrichtung zu planen, um mindestens eine Modifikationsoption der bestimmten Modifikationsoptionen durchzuführen, wobei
das geplante Verhalten eine physische Manipulation mindestens eines physischen Objekts in der Umgebung beinhaltet und/oder
die durchgeführte mindestens eine Modifikationsoption eine soziale Manipulation zum Anpassen der Datenschutzauswirkung durch Modifizieren der gemeinsamen Umgebung der autonomen Vorrichtung und des Benutzers beinhaltet.

2. System nach Anspruch 1, wobei
der Prozessor (9) dazu ausgelegt ist, eine Datenschutzauswirkungsbewertung für jeden Kommunikationskanal mehrerer Kommunikationskanäle zu bestimmen, die zum Kommunizieren der Informationen in der Umgebung einschließlich der Modifikationen verfügbar sind, und den Kommunikationskanal mit der besten Datenschutzauswirkungsbewertung auszuwählen.

3. System nach Anspruch 1 oder 2, wobei
die physische Manipulation mindestens eines von Schließen einer Tür, Schließen eines Fensters, Zuziehen eines Vorhangs, Herunterlassen einer Jalousie, Dimmen eines Lichts, Ein-/Ausschalten eines Lichts, Ändern einer Umgebungslichtintensität, Bewegen eines physischen Objekts, Abspielen von Hintergrundgeräuschen, Blockieren einer Sicht auf eine andere Person oder Abschatten eines Lichts unter Verwendung eines Körpers oder eines Körperteils der autonomen Vorrichtung beinhaltet.

4. System nach einem der vorhergehenden Ansprüche, wobei
das geplante Verhalten eine indirekte physische Manipulation des mindestens einen physischen Objekts oder einer Person oder des Benutzers in der Umgebung beinhaltet, und
das geplante Verhalten Erzeugen und Ausgeben einer Anforderung oder Ausführen einer Aufforderungsaktion an den Benutzer oder die Person beinhaltet, um die physische Manipulation des mindestens einen physischen Objekts, der Person oder des Benutzers durchzuführen.

5. System nach einem der vorhergehenden Ansprüche, wobei
das geplante Verhalten eine verkörperte kommunikative Manipulation beinhaltet, die eines davon umfasst, dass die autonome Vorrichtung sich näher zu dem Benutzer bewegt oder zu diesem tendiert, sich dem Benutzer nähert, einen anderen Kommunikationskanal für mindestens einen Teil der Ausgabeinformationen auswählt und eine Sichtlinie unter Verwendung eines Körpers oder eines Teils des Körpers der autonomen Vorrichtung blockiert, oder
das geplante Verhalten eine verkörperte kommunikative Manipulation beinhaltet, die mindestens eines von Erzeugen und Ausgeben einer Anforderung an eine andere Person, sich an einen anderen Ort zu bewegen, an den Benutzer, sich zusammen mit der autonomen Vorrichtung an einen anderen Ort zu bewegen, oder Ausgeben einer Äußerung an andere Personen umfasst, die Datenschutz mit dem Benutzer anfordert.

6. Autonome Vorrichtung, die das System zum Bewahren von Datenschutz einer Kommunikation oder einer Aktion der autonomen Vorrichtung nach einem der vorhergehenden Ansprüche umfasst, wobei die autonome Vorrichtung Folgendes umfasst:
den mindestens einen Sensor (2);
mindestens einen Aktor (13), der dazu ausgelegt ist, das geplante Verhalten durchzuführen, oder
mindestens eine Ausgabevorrichtung (12), die dazu ausgelegt ist, die zu kommunizierenden Informationen in mindestens einem Kommunikationskanal auszugeben.

7. Autonome Vorrichtung nach Anspruch 6, wobei
der mindestens eine Sensor (2) mindestens eines von einer Kamera, einem Infrarotsensor, einem LIDAR-Sensor, einem RADAR-Sensor, einem berührungsempfindlichen Sensor, einem Bewegungssensor zum Messen eines Vorrichtungsbewegungsparameters, einem Kommunikationssendeempfänger zur Kommunikation zwischen Vorrichtungen umfasst.

8. Autonome Vorrichtung nach Anspruch 6 oder 7, wobei die mindestens eine Ausgabevorrichtung (12) eine Anzeige, einen Projektor, eine Lichtemissionsvorrichtung, ein animiertes menschliches Gesicht oder ein Kommunikationsmittel zum Übertragen der zu kommunizierenden Informationen zum Ausgeben an eine öffentliche Anzeige oder einen öffentlichen Lautsprecher umfasst.

9. Autonome Vorrichtung nach einem der Ansprüche 6 bis 8, wobei
der Aktor (13) mindestens eines von einem Roboterarm zum Manipulieren von Objekten in der Umgebung und einer beweglichen Basis zum Bewegen der autonomen Vorrichtung in der Umgebung beinhaltet.

10. Autonome Vorrichtung nach einem der Ansprüche 6 bis 9, wobei
die autonome Vorrichtung mindestens eines von einem Roboter, mehreren Robotern, einem elektronischen Spielzeug, einem unbemannten Luftfahrzeug, einem unbemannten Bodenfahrzeug, einem unbemannten Seefahrzeug, einem verteilten intelligenten System, einem intelligenten Heizsystem, einem Alarmsystem, einem Türsprechanlagensystem, einem intelligenten Beleuchtungssystem, einer elektrischen Türöffnungsvorrichtung, einer elektronischen Jalousie, einer elektronischen Abschattungsvorrichtung, einem Radio, einem intelligenten TV, einer intelligenten elektronischen Steuervorrichtung und einer intelligenten Stromversorgung beinhaltet.

11. Computerimplementiertes Verfahren zur Verbesserung des Datenschutzes von zu kommunizierenden Informationen oder einer auszuführenden Aktion einer autonomen Vorrichtung, wobei das Verfahren Folgendes umfasst:
Erhalten von Informationen über eine Umgebung basierend auf Sensorinformationen, die von mindestens einem Sensor (2) erfasst werden, der die Umgebung der autonomen Vorrichtung erfasst;
Bestimmen basierend auf den Sensorinformationen, ob das Kommunizieren von Informationen oder das Ausführen einer Aktion durch einen Benutzer von der autonomen Vorrichtung (S1) angefordert wird oder für den Benutzer (S2) von Vorteil ist; und
Bestimmen eines Datenschutzniveaus, das mit den zu kommunizierenden Informationen oder der auszuführenden Aktion assoziiert ist, basierend auf den Informationen oder der Aktion (S6) und Schätzen einer Datenschutzauswirkung für das Kommunizieren der Informationen oder Ausführen der Aktion in der Umgebung basierend auf den Informationen über die Umgebung und den zu kommunizierenden Informationen oder der auszuführenden Aktion (S7);
Planen eines Verhaltens der autonomen Vorrichtung, und Erzeugen eines Steuersignals für die autonome Vorrichtung basierend auf dem geplanten Verhalten und Ausgeben des erzeugten Steuersignals an mindestens eines von dem Aktuator (13) oder einer Ausgangsschnittstelle (12) der autonomen Vorrichtung (S9), und wobei das Verfahren **dadurch gekennzeichnet ist, dass** es Folgendes umfasst:
Analysieren der Informationen über die Umgebung zum Bestimmen von Modifikationsoptionen in der Umgebung der autonomen Vorrichtung, die die Datenschutzauswirkung verbessern (S8), und
Planen des Verhaltens der autonomen Vorrichtung, um mindestens eine Modifikationsoption der bestimmten Modifikationsoptionen durchzuführen, wobei das geplante Verhalten eine physische Manipulation mindestens eines physischen Objekts in der Umgebung beinhaltet und/oder
die durchgeführte mindestens eine Modifikationsoption eine soziale Manipulation zum Anpassen der Datenschutzauswirkung durch Modifizieren der gemeinsamen Umgebung der autonomen Vorrichtung und des Benutzers beinhaltet.

12. Computerprogramm, umfassend Anweisungen, die, wenn ein Computer das Programm ausführt, den Computer veranlassen, das Verfahren nach Anspruch 11 durchzuführen.

## Revendications

1. Système pour améliorer la confidentialité d'informations à communiquer ou une action à effectuer par un dispositif autonome, le système comprenant :
un module de perception (4) configuré pour obtenir des informations sur un environnement sur la base d'informations de capteur acquises par au moins un capteur (2) détectant l'environnement du dispositif autonome ;
un processeur (5, 7, 8, 9, 10) configuré pour déterminer, sur la base des informations du capteur, si des informations de communication ou l'exécution d'une action sont demandées par un utilisateur depuis le dispositif autonome, ou sont bénéfiques pour l'utilisateur ; et
le processeur (5, 7, 8, 9, 10) étant en outre configuré pour déterminer un niveau de confidentialité associé aux informations à communiquer ou à l'action à exécuter sur la base des informations ou de l'action, et pour estimer un impact sur la vie privée pour communiquer les informations ou exécuter l'action dans l'environnement sur la base des informations sur l'environnement et des informations à communiquer ou de l'action à exécuter ;
le processeur (5, 7, 8, 9,10) étant en outre configuré pour planifier un comportement du dispositif autonome, et
le processeur (5, 7, 8, 9, 10) étant en outre configuré pour générer un signal de commande pour le dispositif autonome sur la base du comportement planifié et pour délivrer en sortie le signal de commande généré vers au moins un actionneur (13) ou une interface de sortie (12) du dispositif autonome, et le système étant **caractérisé en ce que**
le processeur (5, 7, 8, 9, 10) est en outre configuré pour analyser les informations sur l'environnement afin de déterminer des options de modification dans l'environnement du dispositif autonome qui améliorent l'impact sur la vie privée, et pour planifier le comportement du dispositif autonome afin d'exécuter au moins une option de modification des options de modification déterminées, où
le comportement planifié comprend une manipulation physique d'au moins un objet physique dans l'environnement, et/ou
l'au moins une option de modification effectuée comprend une manipulation sociale permettant d'adapter l'impact de confidentialité par modification de l'environnement commun du dispositif autonome et de l'utilisateur.

2. Système selon la revendication 1, dans lequel
le processeur (9) est configuré pour déterminer un score d'impact de confidentialité pour chaque canal de communication de plusieurs canaux de communication disponibles pour communiquer les informations dans l'environnement, y compris les modifications, et pour sélectionner le canal de communication ayant le meilleur score d'impact de confidentialité.

3. Système selon la revendication 1 ou la revendication 2, dans lequel
la manipulation physique comprend au moins une opération parmi la fermeture d'une porte, la fermeture d'une fenêtre, le tirage d'un rideau, l'abaissement d'un store, l'atténuation d'une lumière, l'allumage d'une lumière, le changement du niveau de lumière ambiante, le déplacement d'un objet physique, l'émission du bruit de fond, le blocage de la vue d'une autre personne ou le le tamisage d'une lumière à l'aide d'un corps ou d'une partie du corps du dispositif autonome.

4. Procédé selon l'une quelconque des revendications précédentes, dans lequel
le comportement planifié comprend une manipulation physique indirecte de l'au moins un objet physique ou d'une personne ou de l'utilisateur dans l'environnement, et
le comportement planifié comprend la génération et l'émission d'une demande ou l'exécution d'une action incitant l'utilisateur ou la personne à effectuer la manipulation physique de l'au moins un objet physique, de la personne ou de l'utilisateur.

5. Procédé selon l'une quelconque des revendications précédentes, dans lequel
le comportement planifié comprend une manipulation communicative incarnée comprenant au moins l'une des actions suivantes : le dispositif autonome se déplace ou se penche plus près de l'utilisateur, s'approche de l'utilisateur, sélectionne un autre canal de communication pour au moins une partie des informations de sortie, et bloque une ligne de visée en utilisant un corps ou une partie du corps du dispositif autonome, ou le comportement planifié comprend une manipulation communicative incarnée comprenant au moins une étape comprenant de générer et d'émettre en sortie une demande à une autre personne afin qu'elle se déplace vers un autre emplacement, à l'utilisateur pour qu'il se déplace vers un autre emplacement avec le dispositif autonome, ou d'émettre en sortie une déclaration à d'autres personnes demandant la confidentialité avec l'utilisateur.

6. Dispositif autonome, comprenant le système pour préserver la confidentialité d'une communication ou d'une action du dispositif autonome selon l'une des revendications précédentes, le dispositif autonome comprenant
l'au moins un capteur (2) ;
au moins un actionneur (13) configuré pour exécuter le comportement planifié, ou
au moins un dispositif de sortie (12) configuré pour délivrer en sortie les informations à communiquer dans au moins un canal de communication.

7. Dispositif autonome selon la revendication 6, dans lequel
l'au moins un capteur (2) comprend au moins l'un parmi une caméra, un capteur infrarouge, un capteur LIDAR, un capteur RADAR, un capteur tactile, un capteur de mouvement permettant de mesurer un paramètre de mouvement d'un dispositif, un émetteur-récepteur de communication permettant de communiquer entre des dispositifs.

8. Dispositif autonome selon la revendication 6 ou la revendication 7, dans lequel
les un ou plusieurs dispositifs de sortie (12) comprennent un affichage, un projecteur, un dispositif émetteur de lumière, un visage animé de type humain, ou un moyen de communication pour transmettre les informations à communiquer pour les transmettre à un affichage public ou à un haut-parleur.

9. Dispositif autonome selon l'une quelconque des revendications 6 à 8, dans lequel
l'actionneur (13) comprend au moins l'un parmi un bras robotisé servant à manipuler des objets dans l'environnement et une base mobile servant à déplacer le dispositif autonome dans l'environnement.

10. Dispositif autonome selon l'une quelconque des revendications 6 à 9, dans lequel
le dispositif autonome comprend au moins l'un parmi un robot, plusieurs robots, un jouet électronique, un véhicule aérien sans pilote, un véhicule terrestre sans pilote, un véhicule marin sans pilote, un système intelligent distribué, un système de chauffage intelligent, un système d'alarme, un système d'interphone de porte, un système d'éclairage intelligent, un dispositif d'ouverture de porte électrique, un store électronique, un dispositif d'ombrage électronique, une radio, une télévision intelligente, un dispositif de commande électronique intelligent et une alimentation électrique intelligente.

11. Procédé mis en œuvre par ordinateur pour améliorer la confidentialité d'informations à communiquer ou une action à effectuer d'un dispositif autonome, le procédé comprenant les étapes suivantes :
obtenir des informations sur un environnement sur la base d'informations de capteur acquises par au moins un capteur (2) détectant l'environnement du dispositif autonome ;
déterminer, sur la base des informations du capteur, si des informations de communication ou l'exécution d'une action sont demandées par un utilisateur depuis le dispositif autonome (S1), ou sont bénéfiques pour l'utilisateur (S2) ; et
déterminer un niveau de confidentialité associé aux informations à communiquer ou à l'action à exécuter sur la base des informations ou de l'action (S6), et estimer un impact sur la confidentialité pour communiquer les informations ou exécuter l'action dans l'environnement sur la base des informations sur l'environnement et des informations à communiquer ou de l'action à exécuter (S7) ;
planifier un comportement du dispositif autonome, et générer un signal de commande à destination du dispositif autonome sur la base du comportement planifié et pour délivrer en sortie le signal de commande généré vers au moins l'un parmi un actionneur (13) ou une interface de sortie (12) du dispositif autonome (S9), et le procédé étant
**caractérisé en ce qu'**il comprend
d'analyser les informations sur l'environnement pour déterminer des options de modification dans l'environnement du dispositif autonome qui améliorent l'impact sur la confidentialité (S8), et
planifier le comportement du dispositif autonome pour effectuer au moins une option de modification des options de modification déterminées, où
le comportement planifié comprend une manipulation physique d'au moins un objet physique dans l'environnement, et/ou
l'au moins une option de modification effectuée comprend une manipulation sociale permettant d'adapter l'impact de confidentialité par modification de l'environnement commun du dispositif autonome et de l'utilisateur.

12. Programme informatique comprenant des instructions qui, lorsqu'un ordinateur exécute le programme, amènent l'ordinateur à exécuter le procédé selon la revendication 11.
